# EUROPEAN PATENT SPECIFICATION

(11) **EP 1 995 081 B1**
(45) Date of publication and mention of the grant of the patent: **14.07.2010**
(21) Application number: 08009280.2
(22) Date of filing: 20.05.2008
(51) Int. Cl.: B60C 11/04

(54) **Heavy duty tire**
Schwerlastreifen
Pneu poids-lourd

(30) Priority: 23.05.2007 JP 2007136989
(43) Date of publication of application: 26.11.2008
(73) Proprietor: Sumitomo Rubber Industries, Ltd., Kobe-shi, Hyogo-ken (JP)
(72) Inventor: Takahashi, Shingo, Kobe-shi Hyogo-ken (JP)
(74) Representative: Manitz, Finsterwald & Partner GbR

(56) References cited:
- US-A- 2 260 193

## Description

### Background of the invention

The present invention relates to a pneumatic tire, more particularly to a heavy duty tire with a tread structure capable of improving noise performance.

In general, heavy-duty tires for trucks, buses and the like are provided with a tread portion having wide circumferential grooves and axial grooves opened thereto in order to improve the road grip performance, wet performance and like.

In the ground contacting patch of such a tire, the circumferential groove closed by the road surface forms an air tube whose circumferential ends are opened. During running, the air tube resonates and generates a resonance sound as a tire noise as well known in the tire art.

In comparison with the passenger car tires, the sizes of the heavy-duty tires are large, and accordingly, the circumferential grooves and axial grooves are relatively wide and deep. Therefore, the resonance is liable to occur and the noise sound becomes larger. Further, the axial groove makes a large volume change when coming into the ground contacting patch and leaving therefrom. As a result, the air in the axial groove is jetted out into the wide circumferential groove, while generating so called pumping sound and also exciting the resonance of the air tube.

Therefore, such a relatively large resonance sound and pumping sound have been believed to be inherent in the largesized heavy-duty tires.

### Summary of the Invention

It is therefore, an object of the present invention to provide a heavy duty tire in which the resonance sound and pumping sound are reduced and thereby the noise performance is improved.

According to the present invention, a heavy duty tire comprises a tread portion provided with: a circumferential groove disposed on each side of the tire equator and extending continuously in the tire circumferential direction; and axial grooves extending from the circumferential groove, wherein
the circumferential groove is provided with a noise-reducing valvular wall protruding radial outwardly from the groove bottom and extending continuously in the tire circumferential direction,
the radial height DL of the radially outer end of the valvular wall from the groove bottom is in a range of from 1.0 to 1.08 times the groove depth WL of the circumferential groove, and
the width TW of the valvular wall at the radially outer end thereof is in a range of from 0.5 to 0.85 times the width BW of the valvular wall at the radially inner end thereof, and further
the width Tw of the valvular wall at the radially outer end thereof is in a range of from 0.2 to 0.5 times the groove width sw of the circumferential groove at the tread surface.

Therefore, in the ground contacting patch, the valvular wall can contact with the road surface, and the valvular wall is deformed and moved in the widthwise direction of the circumferential groove at random during running because the valvular wall is very thin. Accordingly, a constant or stationary air tube can not be formed, and a standing wave can not be generated. Namely, the resonance is effectively prevented. Further, the valvular wall can damp the jet out air, and as a result, the noise sound level is decreased, and the excitation of the air tube is controlled. Thus, the noise performance is effectively improved.

In the following description, various dimensions, positions and the like refer to the values measured under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflate to the standard pressure and loaded with the standard tire load. The standard wheel rim is a wheel rim officially approved for the tire by standard organization, i.e. JATMA (Japan and Asia), T&RA (North America), ETRTO (Europe), STRO (Scandinavia) and the like. The standard pressure and the standard tire load are the maximum air pressure and the maximum tire load for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. The standard load is the "maximum load capacity" in JATMA, the "Load capacity" in ETRTO, the maximum value given in the above-mentioned table in TRA or the like.

### Brief Description of the Drawings

Fig.1 is a developed view of the tread portion of a heavy duty tire according to the present invention.
Fig.2 is a cross sectional view of a circumferential groove provided with a valvular wall taken along line A-A of Fig.1.
Fig.3(A) is a perspective view of an example of the valvular wall having a constant height.
Fig.3(B) is a perspective view of an example of the valvular wall having a variable height.
Figs.4(A) and 4(B) are a plan view and a perspective view of an example of the valvular wall whose radially outer portion is meandered though the radially inner base portion is not meandered.
Fig.5 is a perspective view a side wall of the circumferential groove showing small radial grooves.
Figs.6(A) and 6(B) are side views of the small radial grooves for explaining a function thereof.
Fig.7 is a side view showing another example of the small radial grooves.
Fig.8(A) is a plan view of an example of the valvular wall extending zigzag about the widthwise center line of the circumferential groove.
Fig.8(B) is a plan view of an example of the valvular wall extending zigzag about the widthwise center line of a straight circumferential groove.
Fig.9 is a diagram for explaining the mounting positions of test tires used in the undermentioned comparison test.

### Description of the Preferred Embodiments

Embodiments of present invention will now be described in detail in conjunction with accompanying drawings.

Heavy duty tire 1 according to the present invention comprises a tread portion 2, a pair of bead portions, a pair of sidewall portions extending from the tread edges E to the bead portions, a carcass extending between the bead portions, a tread reinforcing belt disposed in the tread portion as usual.

The tread edges E are the axial outermost edges of the ground contacting patch (camber angle=0) in the normally inflated loaded condition.

The tread portion 2 is provided with tread grooves to form a tread pattern.

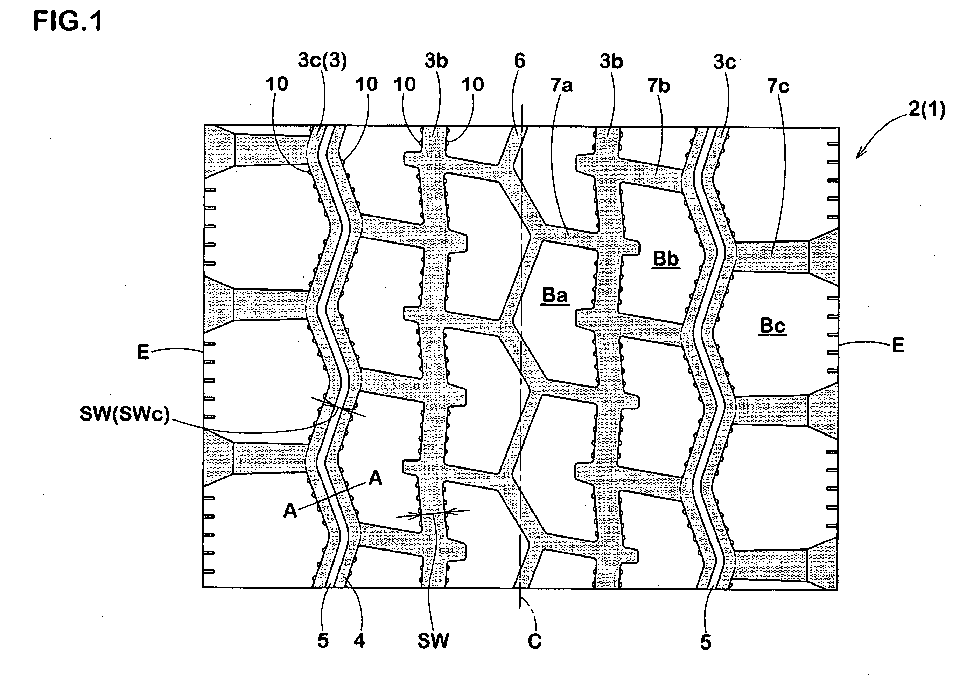

The tread grooves include circumferential grooves extending continuously in the tire circumferential direction. In this embodiment, as shown in Fig.1, the circumferential grooves include wide circumferential grooves 3 (3b, 3c) and narrow circumferential groove 6. The narrower circumferential groove 6 extends on the tire equator C.

The wide circumferential grooves 3 include: a middle circumferential groove 3b disposed on each side of the tire equator c; and an outer circumferential groove 3c disposed axially outside the middle circumferential groove 3b.

The circumferential grooves 6 and 3 in this embodiment each have a zigzag configuration in order to improve the traction performance of the tire by the increased axial components of the edges of the grooves. It is preferable that all of the zigzagged circumferential grooves (6, 3) are the same in respect of the number of the zigzag pitches in view of the uneven wear resistance. Meanwhile, it is also possible that one of (e.g. groove 6), or some of (e.g. grooves 3b), or all of the circumferential grooves 6 and 3 are straight grooves.

The tread grooves further include axial grooves 7. In this embodiment, as shown in Fig.1, the axial grooves 7 include: inner axial grooves 7a extending between the central circumferential groove 6 and the middle circumferential grooves 3b; middle axial grooves 7b extending between the middle circumferential grooves 3b and the outer circumferential grooves 3c; and outer axial grooves 7c extending between the outer circumferential grooves 3c and the tread edges E. Accordingly, each region between the circumferential grooves 6 and 3b is divided into a row of inner blocks Ba. Each region between the circumferential grooves 3b and 3c is divided into a row of middle blocks Bb.
Each region between the outer circumferential grooves 3c and the tread edges E is divided into a row of shoulder blocks BC.

In order to improve the traction performance, the inner axial grooves 7a and middle axial grooves 7b are inclined towards the same direction (in Fig.1, left side upward inclination). The inclination angles thereof are not more than 45 degrees, preferably not more than 30 degrees with respect to the tire axial direction.

In order to provide lateral stiffness or rigidity for the shoulder blocks BC, the angles of the outer axial grooves 7c are decreased to less than the above-mentioned angles of the inner axial grooves 7a and middle axial grooves 7b. For example, the angles of the outer axial grooves 7c are set in a range of from 0 to 5 degrees with respect to the tire axial direction. Thus, the outer axial grooves 7c are substantially parallel with the tire axial direction.

In the case that the circumferential grooves 6 and 3 are zigzag, it is preferable that each of the axial grooves 7 extends from one of the peaks of zigzag of one of the circumferential grooves to one of the peaks of zigzag of the adjacent circumferential groove.

According to present invention, at least one of the wide circumferential grooves 3 is provided with a noise-reducing valvular wall 5. Therefore, the middle circumferential grooves 3b and/or the outer circumferential grooves 3c can be provided with valvular walls 5. in this embodiment, each of the outer circumferential grooves 3c is provided with the valvular wall 5 since the outer circumferential grooves 3c affect the tire noise largely.

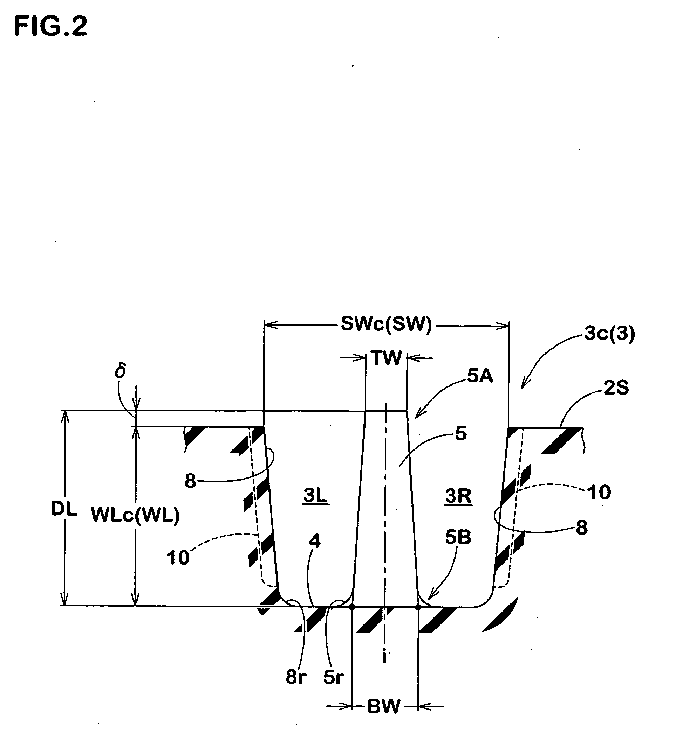

As shown in Fig.2, the wide circumferential groove 3 has a pair of side walls 8 and a groove bottom 4, and the thin valvular wall 5 protrudes radially outwardly from the groove bottom 4 independently from the side walls 8. The side walls 8 are inclined such that the groove width increases from the groove bottom 4 towards the groove top at the tread surface 2s. In this embodiment, the side walls 8 are inclined symmetrically about the widthwise center line (i) of the groove.

The valvular wall 5 extends continuously along the entire length of the circumferential groove 3(3c).

The radial height DL from the groove bottom 4 to the radially outer end 5A of the valvular wall 5 is set in a range of from 1.0 to 1.08 times the groove depth WL(WLC) of the circumferential groove 3(3c).

The width TW of the valvular wall 5 measured at the radially outer end 5A is set in a range of from 0.5 to 0.85 times the width BW of the valvular wall 5 at the radially inner end 5B thereof.

The width Tw of the valvular wall 5 measured at the radially outer end 5A is set in a range of from 0.2 to 0.5 times the width SW(SWC) of the circumferential groove 3(3c) measured at the tread surface 2s.

Here, the width BW and width TW of the valvular wall 5 and the groove width SW(SWC) are measured perpendicularly to the longitudinal direction of the circumferential groove 3(3c). The groove widths sw of the other circumferential grooves 6 and 3b, the groove widths of the axial grooves 7, and the like are measured perpendicularly to the respective longitudinal directions of the grooves.

As explained above, since the height DL is not less than 1.0 times the groove depth, the valvular wall 5 functions as a shielding for the air jetted-out from the axial grooves 7 into the circumferential groove 3(3c). Thus, the leakage of the pumping sound is controlled, and the noise sound can be reduced. Further, the excitation of the air in the circumferential groove is reduced. Furthermore, as the valvular wall 5 divides the width of the circumferential groove into two parts 3L and 3R, the air in the circumferential groove becomes hard to resonate. As a result, the noise can be effectively reduced.

If the height DL is less than 1.0 times the depth of the circumferential groove, the pumping sound is leaked, and there is a possibility of causing a resonance of the air in the circumferential groove. As a result, it becomes difficult to improve the noise sound.
If the height DL is more than 1.08 times the groove depth, there is a possibility that the ground pressure is relatively decreased at the edges of the circumferential groove, and as a result, uneven wear is liable to occur along the groove edges. Further, the valvular wall 5 is liable to be torn off or broken. Therefore, it is especially preferable that the amount of protrusion (delta) of the valvular wall 5 from the tread surface 2S, namely, the difference (DL-WL) is not more than 1.0 mm.

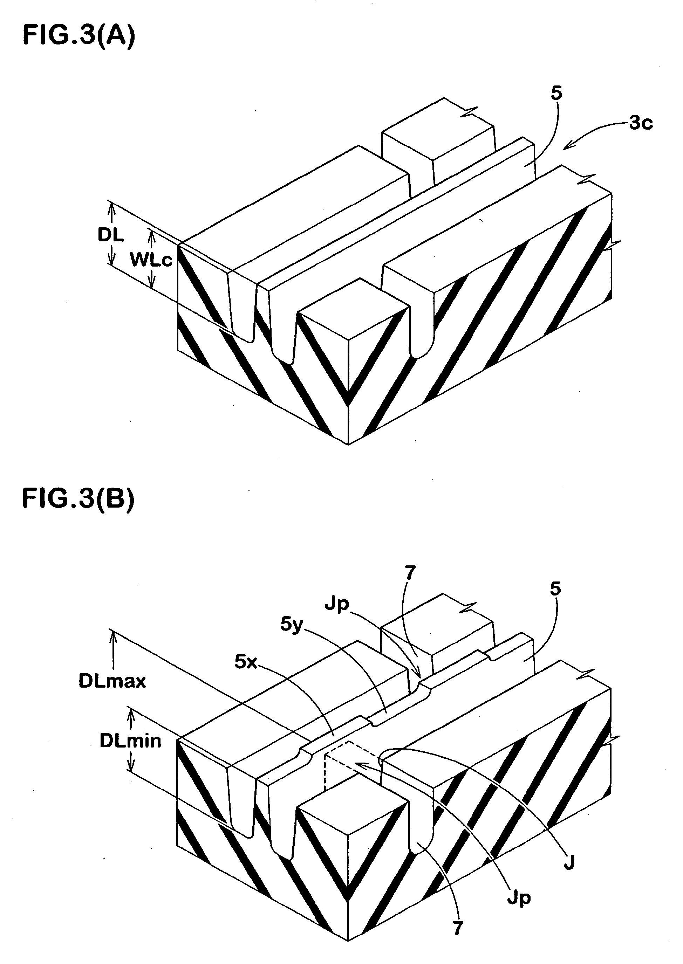

As shown in Fig.3(A), in the case that the height DL of the valvular wall 5 is constant along its length, it is preferable that the height DL is more than 1.0 times the groove depth WL(WLC).

As shown in Fig.3(B), in the case that the valvular wall 5 has a variable height, it is preferable that: higher parts 5x and lower parts 5y alternate in the longitudinal direction; and the higher parts 5x are located at the positions Jp of the intersecting points of the axial grooves 7 with the circumferential groove 3 so that the higher parts 5x are opposed to the openings J of the axial grooves 7.
Thus, the jetted-out air therefrom is defused, and the resultant pumping sound can be effectively reduced.
Technically, the above-mentioned positions Jp are the positions or parts of the valvular wall 5 intersected by extensions of axial grooves 7.

In the example shown in Fig.3(B), the variable height is substantially two different heights, and accordingly, the valvular wall 5 has a profile like a rectangular wave. By the way, aside from such stepped variation, a smooth variation like a sine curve for example is also possible. In this case, therefore the profile becomes smoothly curved line. The maximum DLmax and minimum DLmin of the height DL are in the range of from 1.0 to 1.08 times the groove depth WL(WLC). Thus, it is possible that only the higher parts 5x of the valvular wall 5 protrudes from the tread surface 2S by setting the minimum DLmin equal to the groove depth WL(WLC). It is however, desirable that the minimum DLmin is more than 1.0 times the groove depth WL(WLC) so that the valvular wall 5 protrudes from the tread surface 2S through the entire length.

If the valvular wall 5 is too thick, so called impact sound generated when the valvular wall 5 impacts the road surface becomes increased, and further wet performance such as wet grip is deteriorated since the volume of the circumferential groove is decreased. However, if the ratio TW/SWC becomes less than 0.2 and the valvular wall 5 becomes thin, then the sound insulating effect is decreased and further the outer end portion 5A of the valvular wall 5 becomes liable to be torn off or broken. Therefore, the width TW of the valvular wall 5 at its radially outer end 5A is set in a range of from not more than 0.5 times, but not less than 0.2 times the groove width Swc of the circumferential groove 3. Preferably, the width TW is set to be not less than 3.5 mm in order to prevent the valvular wall 5 from being torn off or broken. But, in order to reduce the impact sound, the width TW is set to be not more than 7.5 mm.

If the width of the circumferential groove is too small, the wet grip performance is deteriorated. If too large contrary, it becomes difficult to shut out the pumping sound because the distances from the open ends of the axial grooves 7 to the valvular wall 5 become increased. Further, there is a possibility that the resonance sound is increased because the volume of each of the divided parts 3L and 3R is increased. Therefore, it is preferable that the groove width Swc of the circumferential groove 3(3c) is set in a range of from 6.0 to 13.0 mm. For the similar reason, it is preferable that the groove depth WL(WLC) of the circumferential groove 3(3c) is set in a range of from 12.0 to 23.0 mm.

In order to prevent damage such as tearing-off of the valvular wall 5, the ratio TW/BW of the top width TW to the base width BW is set in a range of from 0.5 to 0.85.
If the ratio Tw/Bw is more than 0.85, the inner end portion 5B becomes relatively thin and the strength becomes insufficient, the valvular wall 5 is liable to collapse and crack at the root. In this light, the width BW is preferably not less than 4.0 mm. If however, the ratio TW/BW is less than 0.50, since the inner end portion 5B becomes relatively thick and the rigidity is increased, cracks are liable to occur at the groove bottom between the inner end portion 5B and the side walls 8.

In order to avoid concentration of deformation or stress on the groove bottom 4, the groove bottom 4s is connected to the side walls 8 and the side faces of the valvular wall 5 through arcs 8r and 5r as shown in Fig.2, without forming angled corners. In this case, the above-mentioned base width BW of the valvular wall 5 is defined as the distance between the intersections of the extensions of the side faces of the valvular wall 5 with the extension of the groove bottom 4S.

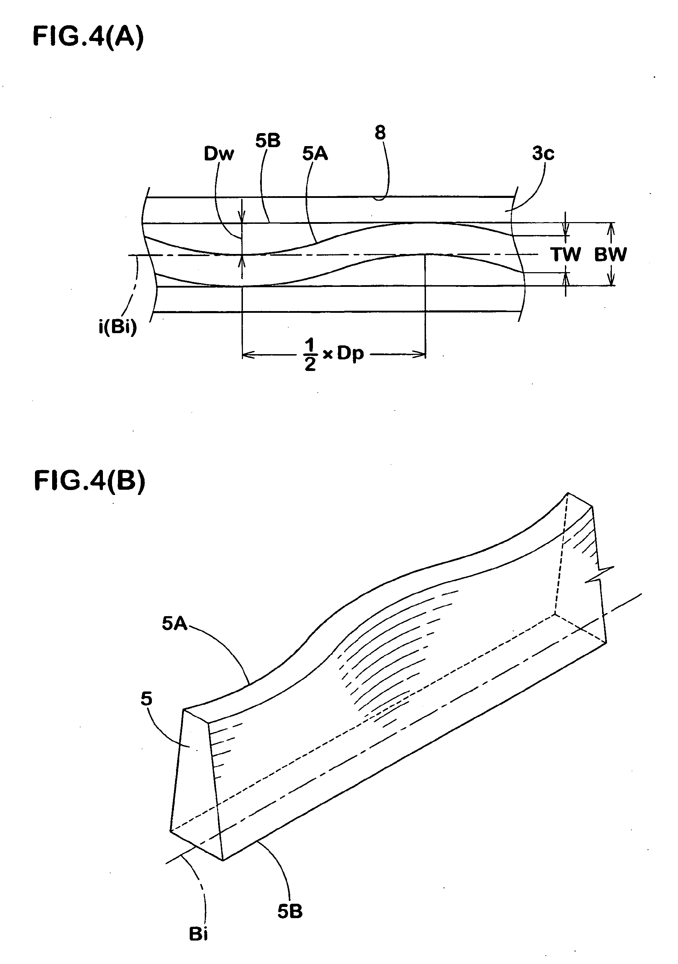

In this embodiment, as shown in Figs.4(A) and 4(B), the inner end portion 5B of the valvular wall 5 is parallel with the longitudinal direction or the widthwise center line (i) of the circumferential groove 3(3c). But, the outer end portion 5A of the valvular wall 5 is zigzagged about the widthwise center line Bi of the inner end portion 5B. Preferably, the zigzag amplitude Dw is set to be not more than the difference (TW-BW) between the top width Tw and base width BW. Preferably, the zigzag pitch Dp is set in a range of from 7 to 15 times the zigzag amplitude Dw. As a result, the apparent rigidity of the valvular wall 5 is increased. Further, the zigzag configuration of the valvular wall 5 makes it easier to release the small objects such as stones entrapped in the groove parts 3L and 3R. In this embodiment, the widthwise center line Bi of the inner end portion 5B coincides with the widthwise center line (i) of the circumferential groove 3. But, the widthwise center line Bi may be off the groove widthwise center line (i).

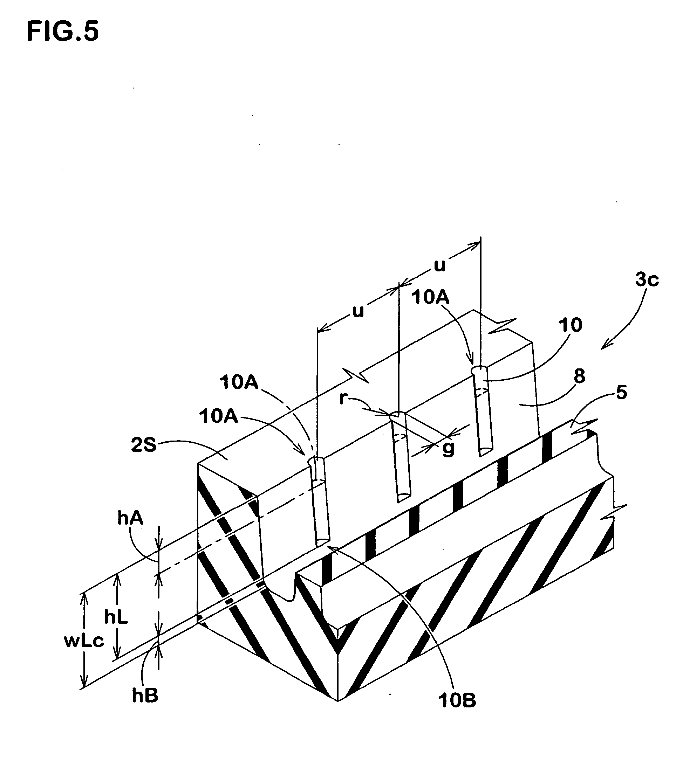

As shown in Fig.5, at least one of, in this embodiment each of the side walls 8 of the wide circumferential groove 3 (3b, 3c) is provided with small radial grooves 10 extending in the radial direction of the tire.

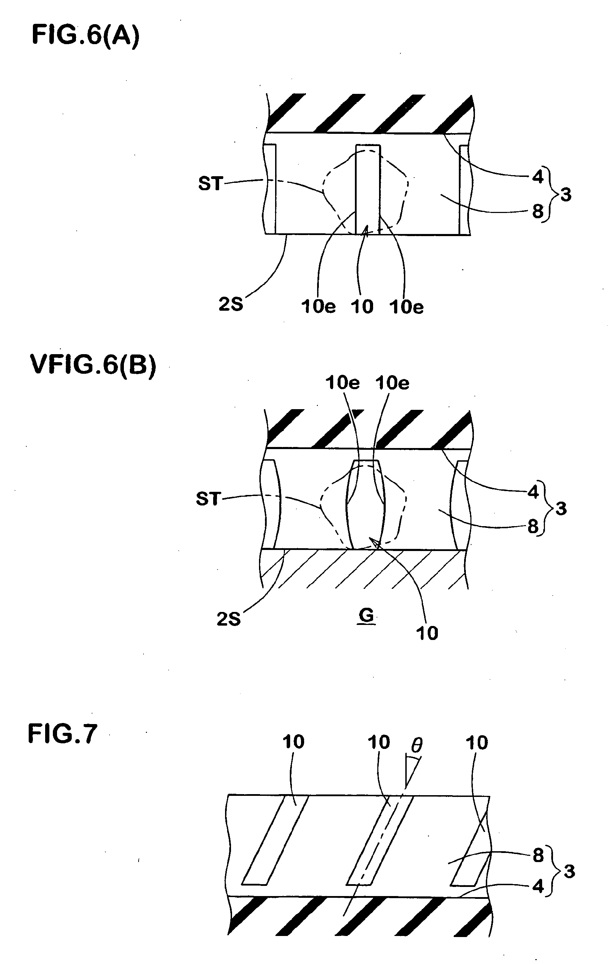

The small radial grooves 10 can hinder the occurrence of the standing wave, namely, resonance of the air in the circumferential groove as well as the entrapment of small objects such as stones in the groove 3, especially in the divided narrow groove parts 3L and 3R.
If an entrapped stone ST reaches to one of the small radial grooves 10 as shown in Fig.6(A) and comes into the ground contacting patch as the tire rotates, then the radial groove 10 is compressed by the road surface G and deformed to increase its width as shown in Fig.6(B). Thereafter, as the compressive force is decreased, the radial groove 10 returns to the original shape, while pushing out the entrapped stone ST by the edges 10e of the radial groove 10. The pushed stone ST is moved radially outwards, namely, towards the direction of less resistance, and discharged lastly.

In this embodiment, the radially outer ends 10A of the radial grooves 10 are opened at the tread surface 2S. But, as shown in Fig.5 by chain line, the radially outer ends 10A can be terminated at positions radially inside the tread surface 2S. In this case, the radial distance hA from the tread surface 2S to the radially outer end 10A is preferably not less than 20% of the depth WL(WLC) of the circumferential groove 3(3c).

in either case, the radial distance hB from the tread surface 2S to the radially inner end 10B of the small radial grooves 10 is set in a range of from 80 to 100 % of the groove depth WL(WLC).
If the distance hA is more than 20% of the groove depth WL(WLC) and the distance hB is less than 80% of the groove depth WL(WLC), it becomes difficult for the radial grooves 10 to discharge entrapped stones effectively.
It is especially preferable that the radially outer ends 10A are opened at the tread surface 2s and the radial grooves 10 have a radial length hL of not less than 85% of the groove depth WL(WLC).

In this embodiment, each of the radial grooves 10 extends substantially in parallel with the tire radial direction. But, as show in Fig.7, the radial grooves 10 can be inclined at a certain angle theta with respect to the radial direction. If the angle theta is more than 45 degrees, the effect to control the air resonance is decreased. Further, the effect to discharge entrapped stones can not be obtained because the radial grooves 10 are deformed to decrease the groove width when in the ground contacting patch. Furthermore, the resistance to pulling out the vulcanization mold is increased. Therefore, the angle theta is not more than 45 degrees, preferably not more than 30 degrees, more preferably not more than 20 degrees.

As shown in Fig.5, in the cross section of the radial groove 10 taken perpendicularly to the longitudinal direction thereof, the shape or configuration of the radial groove 10 (in this embodiment, therefore, a cross sectional shape in parallel with the tread surface 2S) is a substantially semicircle whose radius of curvature (r) is 0.8 to 2.2 mm.
Therefore, cracks occurring from the radial groove 10 especially from the inner end portion 10B thereof can be prevented. If the radius of curvature (r) is less than 0.8 mm, there is a possibility that the radial grooves 10 themselves induce cracks. If the radius of curvature (r) is more than 2.2 mm, there is a possibility that small objects are entrapped in the radial grooves 10.
The cross sectional shape in this example is a semicircle, namely, a single radius curve. But, a multi-radius curve can be used as well in so far as the curve is smooth and preferably the radii are in the range of 0.8 to 2.2 mm.
Further, the cross sectional shape may be changed, but preferable the cross sectional shape is constant along the almost entire length thereof.

If the distance (u) between the adjacent radial grooves 10 is too small, then the part therebetween is decreased in the rigidity and liable to cause damages such as tearing off and breakage. Therefore, the distance (u) measured along the longitudinal direction of the circumferential groove is preferably set in a range of not less than 0.8 times, more preferably not less than 1.0 times the groove width (g) of the radial groove 10.
If the distance (u) is too large, the effect to control the air resonance and the effect to discharge entrapped stones are deteriorated. Therefore, the distance (u) is preferably set in a range of not more than 3.0 times, more preferably not more than 2.5 times the groove width (g) of the small radial grooves 10.

It is advantageous that radial grooves 10 are disposed in the circumferential grooves 3(3c) provided with the valvular wall 5. But, it is also preferable that, as shown in Fig.1, the radial grooves 10 are disposed in the circumferential grooves 3 not provided with the valvular wall 5 (for example the middle circumferential groove 3b in this embodiment).

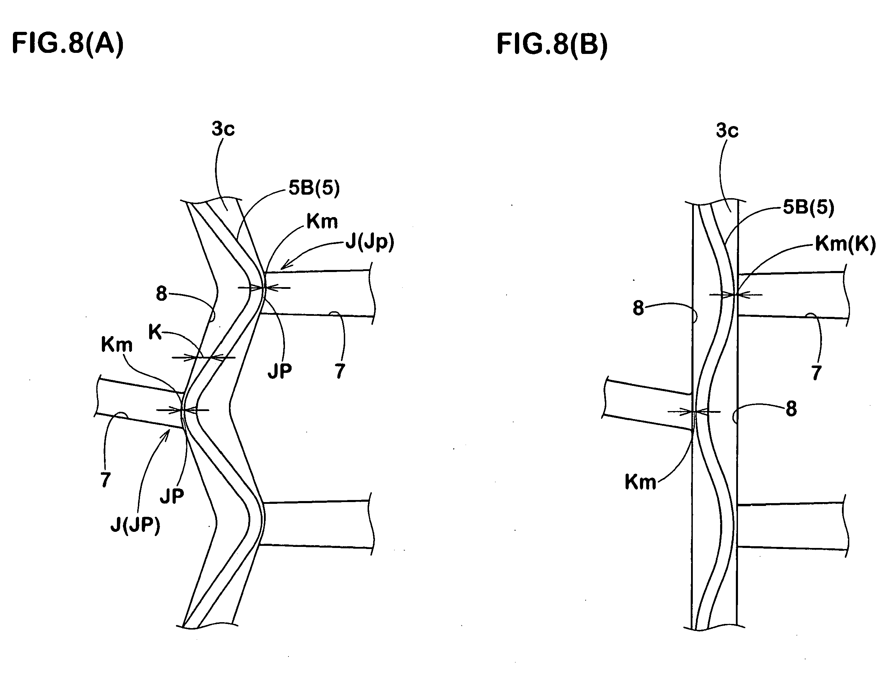

Fig.8(A) and 8(B) shows further examples of the valvular wall 5. In Fig.8(A), the circumferential groove 3(3c) provided with the the valvular wall 5 is a zigzag groove. in Fig.8(B), the circumferential groove 3(3c) provided with the the valvular wall 5 is a straight groove. In each example, the valvular wall 5 extends zigzag within the width of the circumferential groove 3(3c). Accordingly, the distance K between the valvular wall 5 and the groove side walls 8 is periodically changed. The minimum distance Km occurs at the intersecting points Jp of the axial grooves 7 with the circumferential groove 3(3c) so that the open ends J of the axial grooves 7 are almost closed by the valvular wall 5. Thus the sound insulating effect is further improved. Incidentally, at the intersecting points, the distance K can be defined between the inner end portion 5B and an extension of the side wall 8.

In the example shown in Fig.1, as explained above, the tread portion 2 is provided with a block pattern comprising two rows of the inner blocks Ba, two rows of the middle blocks Bb, and two rows of the shoulder blocks Bc.
But, the tread pattern is not limited to such block pattern. For example, some of the axial grooves 7a, 7b and 7c can be terminated before the circumferential grooves without intersections. More specifically, the outer axial grooves 7c can be terminated before the circumferential grooves 3c. In this case, the shoulder region between the outer circumferential groove 3c and tread edge E is provided with a circumferential continuity and as a result, the rigidity is increased to increase the cornering power.

The above-mentioned techniques: (a) the technique for changing the radial height DL of the valvular wall 5 as shown in Fig.3(B); (b) the technique for zigzagging the radially outer end 5A of the valvular wall 5 as shown in Fig.4; and (c) the technique for changing the distance K between the radially inner end 5B of the valvular wall 5 and the side walls 8 of the circumferential groove 3 as shown in Figs.8(A) and 8(B) in other words the technique for zigzagging the entire height of the valvular wall 5, are optional. One or more of them in any combination can be incorporated in the tire of the present invention.

### Comparison tests

Heavy duty tires of size 11R22.5 (rim size: 7.50x22.5) for trucks and buses were prepared and tested for noise performance, wet performance, stone entrapment, and durability of the valvular wall.

All of the test tires (control tire CON, embodiment tires EX.1-7, comparative tires com.1-4) had the same structure and the same tread pattern shown in Fig.1 except for the valvular walls.
In the control tire CON, the valvular wall was not provided.
In the embodiment tires EX.1-7 and comparative tires com.1-4, the valvular wall was formed along the widthwise center line of the circumferential grooves 3c. The height DL and the distance K from the groove side wall 8 were constant along the entire length of the circumferential groove 3c.
The specifications of the valvular walls are shown in Table 1.

### Noise performance test:

### <Noise inside car>

A 2-D wheel type 8-ton truck (empty load) provided on all of the six wheels with the same type test tires, was run on a smooth road surface at a speed of 50 km/h, and the overall noise level dB(A) was measured near the left ear (inboard) of the driver. (tire pressure: 800 kPa)

### <Noise outside car>

According to the "Test Procedure for Tire Noise" specified in Japanese JASO-C606, the above-mentioned truck was coasted for 50 meter distance at a speed of 70 km/h on an asphalt road surface of a straight test course, and the maximum noise sound level dB(A) was measured with a microphone set at 1.2 meter height from the road surface and 7.5 meter sideways from the running center line in the midpoint of the course.

The results are shown in Table 1.

### Wet performance test:

The 8-ton truck (empty load) was run along a 100 meter radius circle on an asphalt-paved road partially provided with a 5 mm depth 20 m long water pool, and the lateral acceleration (lateral G) during running in the water pool was measured at the front wheels, gradually increasing the speed entering into the water pool, to obtain the average for the speed range of from 50 to 80 km/h.

The results are indicated in Table 1 by an index based on comparative example 1 being 100, wherein the larger is better.

### Stone entrapment test:

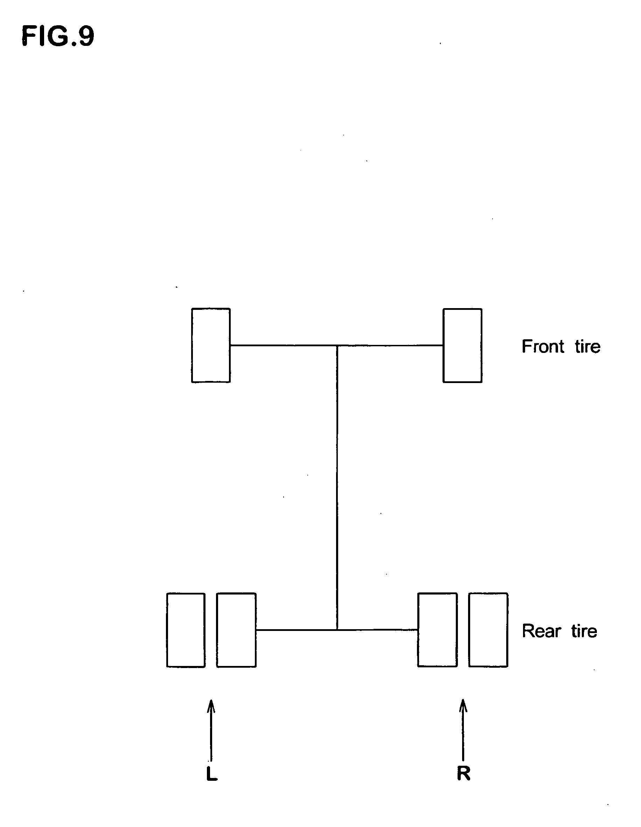

As shown in Fig.9, the 8-ton truck was provided with two control tires on the left rear wheels L, and two embodiment tires or alternatively two comparative tires on the right rear wheels R. The truck was loaded with 8 tons (namely the rated load), and the test was carried out as follow.
Firstly, on a graveled road, the truck made a figure-eight turn five times in a direction and then five times in the reverse direction, at a speed of about 18 km/h. Then, on asphalt-paved public roads, the truck was run for a distance of 24 km. Thereafter, the total number NL of entrapped stones of the two control tires on the left rear wheels L was counted, and the total number NR of entrapped stones of the two test tires, namely embodiment tires or comparative tires on the right rear wheels R was counted.
In Table 1, the total number NR normalized by the number NL, namely (NR/NL)x100 is indicated.

### Valvular wall durability test:

After the 8-ton truck (empty load) was run for 100,000 km, the valvular wall and the groove bottom were visually checked for damage such as tearing-off, cracks and the like, and the number of occurrence of damage was counted. The results are indicated in Table 1 by an index based on Embodiment tire 1 being 100, wherein the smaller is better.

**Table 1**

| Tire | CON | EX.1 | EX.2 | EX.3 | EX.4 | Com.1 | EX.5 | Com.2 | Com.3 | Com.4 | EX.6 | EX.7 |
|---|---|---|---|---|---|---|---|---|---|---|---|---|
| Valvular wall | non | | | | | | | | | | | |
| TW/SW | -- | 0.3 | 0.3 | 0.3 | 0.4 | 0.3 | 0.3 | 0.3 | 0.15 | 0.3 | 0.3 | 0.2 |
| TW/BW | -- | 0.7 | 0.7 | 0.7 | 0.7 | 0.7 | 0.7 | 0.7 | 0.7 | 0.3 | 0.5 | 0.7 |
| DL/WL | -- | 1.0 | 1.0 | 1.08 | 1.0 | 0.9 | 1.05 | 1.1 | 1.05 | 1.05 | 1.05 | 1.05 |
| Zigzag of outer end portion -- | | non | non | non | non | non | non | non | non | non | non | |
| zigzag amplitude Dw (mm) | -- | -- | -- | -- | -- | -- | -- | -- | -- | -- | -- | 4.0 |
| zigzag pitch Dp (mm) | -- | -- | -- | -- | -- | -- | -- | -- | -- | -- | -- | 3.0 |
| Radial groove | non | non | | non | non | non | non | | non | non | non | non |
| radius r (mm) | -- | -- | 1.0 | -- | -- | -- | -- | 1.0 | -- | -- | -- | -- |
| angle theta (deg.) | -- | -- | 0 | -- | -- | -- | -- | 0 | -- | -- | -- | -- |
| distance u (mm) | -- | -- | 2.49 | -- | -- | -- | -- | 2.49 | -- | -- | -- | -- |
| Test Results | | | | | | | | | | | | |
| Noise inside car (dB A) | 65 | 60 | 58 | 55 | 58 | 64 | 59 | 55 | 65 | 60 | 58 | 55 |
| Noise outside car (dB A) | 73 | 67 | 67 | 66 | 65 | 74 | 64 | 66 | 74 | 71 | 69 | 64 |
| Stone entrapment | 100 | 101 | 108 | 97 | 96 | 95 | 97 | 98 | 101 | 107 | 108 | 104 |
| wet performance | 100 | 101 | 100 | 99 | 97 | 99 | 99 | 100 | 101 | 102 | 100 | 101 |
| Valvular wall durability | -- | 100 | 100 | 100 | 99 | 101 | 100 | 101 | 94 | 96 | 98 | 104 |

From the test results, it was conformed that the noise performance can be greatly improved without sacrificing other tire performances in substance.

## Claims

1. A heavy duty tire (1) comprising a tread portion (2),
the tread portion provided with
a circumferential groove (3b, 3c) disposed on each side of the tire equator and extending continuously in the tire circumferential direction, and
axial grooves (7) extending from the circumferential groove, the circumferential groove (3c) provided with a noise-reducing valvular wall (5) protruding radial outwardly from the groove bottom (4) and extending continuously in the tire circumferential direction,
wherein
the radial height DL of the radially outer end of the valvular wall from the groove bottom is in a range of from 1.0 to 1.08 times the groove depth WL of the circumferential groove,
the width TW of the valvular wall at the radially outer end thereof is in a range of from 0.5 to 0.85 times the width BW of the valvular wall at the radially inner end thereof, and
said width TW of the valvular wall at the radially outer end thereof is in a range of from 0.2 to 0.5 times the groove width SW of the circumferential groove at the tread surface.

2. The heavy duty tire according to claim 1, wherein
the valvular wall (5) protrudes radial outwardly from the tread surface (25) through the entire length of the valvular wall.

3. The heavy duty tire according to claim 1, wherein
part (5x) of the valvular wall protrudes radial outwardly from the tread surface, and the rest (5y) is leveled with the tread surface.

4. The heavy duty tire according to claim 1, wherein
the height DL of the valvular wall varies and
the valvular wall comprises relatively higher parts (5x) positioned at intersecting points of the axial grooves (7) with the circumferential groove (3).

5. The heavy duty tire according to claim 1, wherein
the widthwise center line (Bi) of the valvular wall (5) at the radially inner end (5B) extends in parallel with the longitudinal direction of the circumferential groove, but
the widthwise center line of the valvular wall at the radially outer end (5A) extends zigzag about the longitudinal direction of the circumferential groove.

6. The heavy duty tire according to claim 1, wherein
the valvular wall is provided with minimum-distance (Km) portions in which the distance between the radially inner end of the valvular wall and the side walls (8) of the circumferential groove becomes a minimum, and
the minimum-distance portions are disposed at intersecting points of the axial grooves with the circumferential groove.

7. The heavy duty tire according to claim 1, wherein
at least one of the side walls (8) of the circumferential groove is provided with small radial grooves (10) at intervals in the tire circumferential direction.

## Patentansprüche

1. Schwerlastreifen (1), der einen Laufflächenabschnitt (2) umfasst,
wobei der Laufflächenabschnitt versehen ist mit
einer Umfangsrille (3b, 3c), die auf jeder Seite des Reifenäquators angeordnet ist und sich durchgehend in der Umfangsrichtung des Reifens erstreckt, und
Axialrillen (7), die sich von der Umfangsrille erstrecken,
wobei die Umfangsrille (3c) mit einer geräuschverringernden Klappenwand (5) versehen ist, die von dem Rillengrund (4) radial nach außen vorsteht und sich durchgehend in der Umfangsrichtung des Reifens erstreckt,
wobei
die radiale Höhe DL des radial äußeren Endes der Klappenwand von dem Rillengrund in einem Bereich des 1,0- bis 1,08-fachen der Rillentiefe WL der Umfangsrille liegt,
die Breite TW der Klappenwand an ihrem radial äußeren Ende in einem Bereich des 0,5- bis 0,85-fachen der Breite BW der Klappenwand an ihrem radial inneren Ende liegt, und
die Breite TW der Klappenwand an ihrem radial äußeren Ende in einem Bereich des 0,2- bis 0,5-fachen der Rillenbreite SW der Umfangsrille an der Laufflächenoberfläche liegt.

2. Schwerlastreifen nach Anspruch 1, wobei
die Klappenwand (5) von der Laufflächenoberfläche (2s) über die gesamte Länge der Klappenwand radial nach außen vorsteht.

3. Schwerlastreifen nach Anspruch 1, wobei
ein Teil (5x) der Klappenwand von der Laufflächenoberfläche radial nach außen vorsteht und der Rest (5y) mit der Laufflächenoberfläche bündig ist.

4. Schwerlastreifen nach Anspruch 1, wobei
die Höhe DL der Klappenwand variiert, und
die Klappenwand relativ höhere Teile (5x) umfasst, die an Schnittpunkten der Axialrillen (7) mit der Umfangsrille (3) angeordnet sind.

5. Schwerlastreifen nach Anspruch 1, wobei
die Mittellinie Bi in Richtung der Breite der Klappenwand (5) an dem radial inneren Ende (5B) sich parallel zu der Längsrichtung der Umfangsrille erstreckt, aber
die Mittellinie in Richtung der Breite der Klappenwand an dem radial äußeren Ende (5A) sich zickzackförmig um die Längsrichtung der Umfangsrille erstreckt.

6. Schwerlastreifen nach Anspruch 1, wobei
die Klappenwand mit Abschnitten mit minimalem Abstand (Km) versehen ist, in welchen der Abstand zwischen dem radial inneren Ende der Klappenwand und den Seitenwänden (8) der Umfangsrille ein Minimum wird, und
die Abschnitte mit minimalem Abstand an Schnittpunkten der Axialrillen mit der Umfangsrille angeordnet sind.

7. Schwerlastreifen nach Anspruch 1, wobei
zumindest eine der Seitenwände (8) der Umfangsrille mit kleinen radialen Rillen (10) in Intervallen in der Umfangsrichtung des Reifens versehen ist.

## Revendications

1. Pneumatique poids-lourds comprenant une portion formant bande de roulement (2),
la portion formant bande de roulement étant pourvue d'une gorge circonférentielle (3b, 3c) disposée de chaque côté de l'équateur du pneumatique et s'étendant en continu dans la direction circonférentielle du pneumatique, et
de gorges axiales (7) s'étendant depuis la gorge circonférentielle,
la gorge circonférentielle (3c) étant pourvue d'une paroi valvulaire réductrice de bruits (5) qui se projette radialement vers l'extérieur depuis le fond de la gorge (4) et s'étend en continu dans la direction circonférentielle du pneumatique,
dans lequel
la hauteur radiale DL de l'extrémité radialement extérieure de la paroi valvulaire depuis le fond de gorge est dans une plage de 1,0 à 1,08 fois la profondeur de gorge WL de la gorge circonférentielle,
la largeur TW de la paroi valvulaire à l'extrémité radialement extérieure de celle-ci est dans une plage de 0,5 à 0,85 fois la largeur BW de la paroi valvulaire à l'extrémité radialement intérieur de celle-ci, et
ladite largeur TW de la paroi valvulaire à l'extrémité radialement extérieure de celle-ci est dans une plage de 0,2 à 0,5 fois la largeur de gorge SW de la gorge circonférentielle au niveau de la surface de la bande de roulement.

2. Pneumatique poids-lourds selon la revendication 1, dans lequel la paroi valvulaire (5) se projette radialement vers l'extérieur depuis la surface de la bande de roulement (25) à travers la longueur entière de la paroi valvulaire.

3. Pneumatique poids-lourds selon la revendication 1, dans lequel une partie (5x) de la paroi valvulaire se projette radialement vers l'extérieur depuis la surface de la bande de roulement, et le reste (5y) est au niveau de la surface de la bande de roulement.

4. Pneumatique poids-lourds selon la revendication 1, dans lequel
la hauteur DL de la paroi valvulaire varie et
la paroi valvulaire comprend des parties relativement hautes (5x) positionnées aux points d'intersection des gorges axiales (7) avec la gorge circonférentielle (3).

5. Pneumatique poids-lourds selon la revendication 1, dans lequel
la ligne centrale (Bi) dans le sens de la largeur de la paroi valvulaire (5) à l'extrémité radialement intérieure (5B) s'étend en parallèle à la direction longitudinale de la gorge circonférentielle, mais
la ligne centrale dans le sens de la largeur de la paroi valvulaire à l'extrémité radialement extérieure (5A) s'étend en zigzag autour de la direction longitudinale de la gorge circonférentielle.

6. Pneumatique poids-lourds selon la revendication 1, dans lequel
la paroi valvulaire est dotée de portions à distance minimum (Km) dans lesquelles la distance entre l'extrémité radialement intérieure de la paroi valvulaire et les parois latérales (8) de la gorge circonférentielle devient minimum, et
les portions à distance minimum sont disposées aux points d'intersection des gorges axiales avec la gorge circonférentielle.

7. Pneumatique poids-lourds selon la revendication 1, dans lequel
l'une au moins des parois latérales (8) de la gorge circonférentielle est pourvue de petites gorges radiales (10) à intervalles dans la direction circonférentielle du pneumatique.
